# EUROPEAN PATENT APPLICATION

(11) **EP 1 806 934 A1**
(43) Date of publication of application: **11.07.2007**
(21) Application number: 06250028.5
(22) Date of filing: 05.01.2006
(51) Int. Cl.: H04Q 7/28

(54) **Methods and apparatus for increasing security and control of voice communication sessions using digital certificates**

(71) Applicant: Research In Motion Limited, Waterloo, Ontario N2L 3W8 (CA)
(72) Inventor: Estable, Luis Pablo, Hull, Quebec, J9A 3J3 (CA); Mousseeau, Gary P., Waterloo, Ontario, N2L 6M5 (CA)
(74) Representative: Fennell, Gareth Charles

(57) **Abstract**

Methods and apparatus for increasing security and control of voice communication sessions, such as Push-To-Talk (PTT) over Cellular (PoC) sessions, using digital certificates are disclosed. A certificate control mechanism of a private communication network is used to help facilitate secure PoC sessions for mobile communication devices associated with the private network. The certificate control mechanism of includes a certificate controller which is adapted to communicate with a Certificate Authority (CA) component which produces and stores a plurality of digital certificates for the mobile devices. The certificate controller is further adapted to communicate with one of a PoC server and a PoC group list server through a public communication network (e.g. the Internet) so as to provide the plurality of digital certificates for secure PoC communication sessions for chat groups which include the plurality of mobile communication devices. In one illustrative technique, a request message for participation in a PoC session is received by an authentication component of a PoC server from a mobile device. The request message is signed with use of a private key of a digital certificate which may be associated with the mobile device, an end user of the mobile device, or a chat group which includes the mobile device. An authentication procedure is performed on the request message by the authentication component. The authentication procedure includes retrieving a public key associated with the digital certificate and attempting to validate the signature with use of the public key. Processing for the PoC communication session is permitted for the mobile communication device if the authentication is successful, and otherwise denied. Several other techniques and variations are described.

## Description

### BACKGROUND

### Field of the Technology

The present invention relates generally to secure voice communication sessions, and more particularly to secure Push-To-Talk (PTT) over Cellular (PoC) communication sessions with use of digital certificates.

### Description of the Related Art

A mobile communication device, such as a cellular telephone or mobile station, is capable of making and receiving voice calls and/or sending and receiving data over a wireless communication network. Further developments have given such mobile devices the ability to communicate in "push-to-talk" (PTT) modes using Push-to-talk over Cellular (PoC) technology.

PoC communication utilizes Voice-over-IP (VoIP) techniques which involve the communication of data packets carrying voice information. PoC communication is adapted for one-to-one talks or group talks which are session-based. A PoC server of the wireless network is typically utilized to facilitate the PoC sessions. All identities used for conversations and chat groups are publicly available through a Group and List Management Server (GLMS) which interfaces with the PoC server. Requests for conversations and group chats are made to a Session Initiation Protocol (SIP) Core using only SIP identities. The end user of a mobile device may send an "invitation" for PoC communication to other potential "participants" who may "accept" or ignore the invitation. When an initiation is accepted, a PoC session is created between the two participants. Further acceptances of the invitation may expand the session into a group session having more than two participants.

The mobile devices may be associated with a private network, such as a private network of a company or corporation. The need for privacy and security is generally very high in such networks. However, current solutions for PoC do not address the needs for security and privacy. Current and proposed PoC architecture is network-operator-centric, where a single operator runs all necessary components to provide functionality. Such architecture does nothing to limit or protect participants from unwanted attendees in PoC group chats. Thus, the ability to create PoC sessions is not very private, and fraud and eavesdropping may be commonplace if nothing is done to control and manage security.

Accordingly, there is a resulting need for a solution that can increase security for PoC communication sessions for private networks. Such a solution should also allow for bridging of PoC solutions for different operators to provide cross-carrier roaming.

### SUMMARY

Methods and apparatus for increasing security and control of voice communication sessions, such as Push-To-Talk (PTT) over Cellular (PoC) sessions, using digital certificates are described herein.

A certificate control mechanism of a private communication network (e.g. a corporate enterprise) is used to help facilitate secure PoC communication sessions for mobile communication devices associated with the private network. The certificate control mechanism of the private network includes a certificate controller which is adapted to communicate with a Certificate Authority (CA) component so as to produce and store a plurality of digital certificates for the mobile communication devices. The certificate controller is further adapted to communicate with one of a PoC server and a PoC group list server through a public communication network (e.g. the Internet) so as to provide the digital certificates for use in facilitating secure PoC communication sessions for chat groups which include the mobile communication devices.

In one illustrative technique, a request message for participation in a PoC communication session is received by an authentication component of a PoC server from a mobile communication device. The request message is signed with use of a private key of a digital certificate which may be associated with the mobile communication device, an end user of the mobile communication device, or a chat group which includes the mobile communication device. An authentication procedure is performed on the request message by the authentication component. The authentication procedure includes retrieving a public key associated with the digital certificate and attempting to validate the signature with use of the public key. Processing for the PoC communication session is permitted for the mobile communication device if the authentication is successful, and otherwise denied. Additionally or alternatively, at least a portion of the request message may be encrypted by the mobile communication device with a public key of another digital certificate which may be associated with the authentication component or a private network of the mobile communication device. In this case, the portion of the request message is decrypted by the authentication component using a private key of the digital certificate. Several other techniques and variations are described.

### BRIEF DESCRIPTION OF THE DRAWINGS

Embodiments of present invention will now be described by way of example with reference to attached figures, wherein:
FIG. 1 is a block diagram which illustrates pertinent components of a mobile station and a wireless communication network;
FIG. 2 is a more detailed diagram of a preferred mobile station of FIG. 1;
FIG. 3 is a block diagram of general communication system components pertaining to Push-To-Talk (PTT) over Cellular (PoC) communication sessions;
FIG. 4 is an alternative communication system architecture for providing secure PoC communication sessions for mobile communication devices;
FIG. 5 is an alternative illustration of the system architecture of FIG. 4, which further reveals that the secure PoC communication sessions may be established between mobile devices of different wireless communication networks; and
FIGs. 6A and 6B form a flowchart for describing a method for use in increasing security and control of voice communication sessions (e.g. PoC communication sessions) using digital certificates.

### DETAILED DESCRIPTION OF THE PREFERRED EMBODIMENTS

Methods and apparatus for increasing security and control of voice communication sessions, such as Push-To-Talk (PTT) over Cellular (PoC) sessions, with use of digital certificates are disclosed. A certificate control mechanism of a private communication network is used to help facilitate secure PoC sessions for mobile communication devices associated with the private network. The certificate control mechanism of includes a certificate controller which is adapted to communicate with a Certificate Authority (CA) component so as to produce and store a plurality of digital certificates for the mobile devices. The certificate controller is further adapted to communicate with one of a PoC server and a PoC group list server through a public communication network (e.g. the Internet) so as to provide the plurality of digital certificates for use in facilitating secure PoC communication sessions for chat groups which include the mobile devices. In one illustrative technique, a request message for participation in a PoC session is received by an authentication component of a PoC server from a mobile device. The request message is signed with use of a private key of a digital certificate which may be associated with the mobile device, an end user of the mobile device, or a chat group which includes the mobile device. An authentication procedure is performed on the request message by the authentication component. The authentication procedure includes retrieving a public key associated with the digital certificate and attempting to validate the signature with use of the public key. Processing for the PoC communication session is permitted for the mobile communication device if the authentication is successful, and otherwise denied. Several other techniques and variations are described.

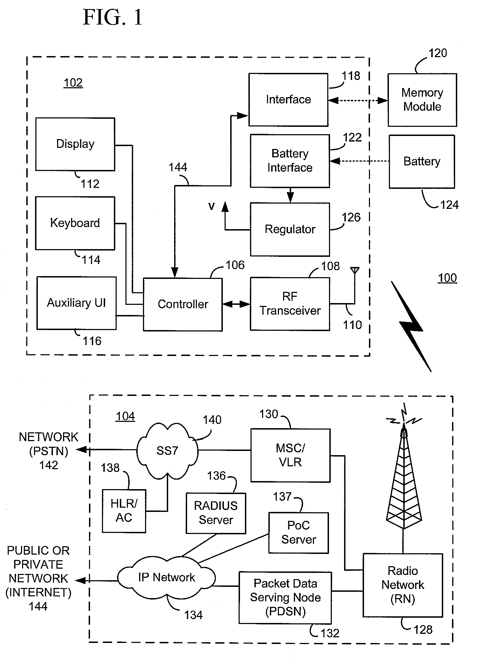

To illustrate general components for communications between the mobile device and the network, FIG. 1 is a block diagram of a communication system 100 which includes a mobile device 102 which communicates through a wireless communication network 104. Mobile device 102 preferably includes a visual display 112, a keyboard 114, and perhaps one or more auxiliary user interfaces (UI) 116, each of which is coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile device 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile device 102, information for transmission to network 104, a telephone number to place a telephone call, commands to be executed on mobile device 102, and possibly other or different user inputs.

Mobile device 102 sends communication signals to and receives communication signals from network 104 over a wireless link via antenna 110. RF transceiver circuitry 108 performs functions similar to those of a radio network (RN) 128, including for example modulation/demodulation and possibly encoding/decoding and encryption/decryption. It is also contemplated that RF transceiver circuitry 108 may perform certain functions in addition to those performed by RN 128. It will be apparent to those skilled in art that RF transceiver circuitry 108 will be adapted to particular wireless network or networks in which mobile device 102 is intended to operate.

Mobile device 102 includes a battery interface 122 for receiving one or more rechargeable batteries 124. Battery 124 provides electrical power to electrical circuitry in mobile device 102, and battery interface 122 provides for a mechanical and electrical connection for battery 124. Battery interface 122 is coupled to a regulator 126 which regulates power to the device. When mobile device 102 is fully operational, an RF transmitter of RF transceiver circuitry 108 is typically turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

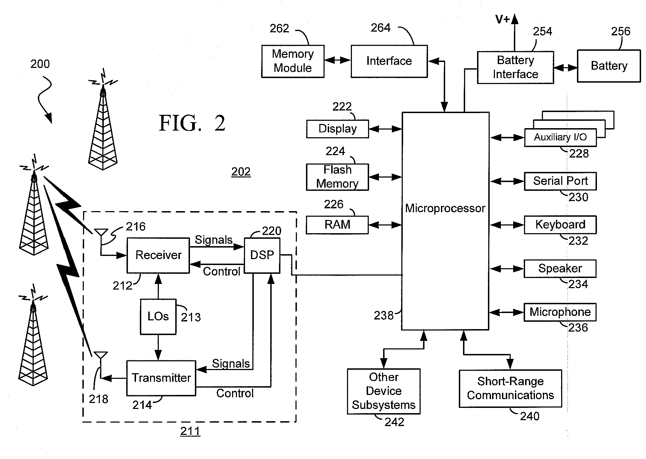

Mobile device 102 operates using a memory module 120, such as a Subscriber Identity Module (SIM) or a Removable User Identity Module (R-UIM), which is connected to or inserted in mobile device 102 at an interface 118. As an alternative to a SIM or an R-UIM, mobile device 102 may operate based on configuration data programmed by a service provider into an internal memory which is a non-volatile memory. Mobile device 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile device 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, and one or more auxiliary UIs 116, and controller 106 may remain within the radio modem unit that communicates with the computer's CPU or be embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile device 102 may have a more particular implementation as described later in relation to mobile station 202 of FIG. 2.

Mobile device 102 communicates in and through wireless communication network 104, which is preferably a cellular telecommunications network. In the embodiment of FIG. 1, wireless network 104 is a Third Generation (3G) supported network based on Code Division Multiple Access (CDMA) technologies. In particular, wireless network 104 is a CDMA2000 network which includes fixed network components coupled as shown in FIG. 1. Wireless network 104 of the CDMA2000-type includes a Radio Network (RN) 128, a Mobile Switching Center (MSC) 130, a Signaling System 7 (SS7) network 140, a Home Location Register/Authentication Center (HLR/AC) 138, a Packet Data Serving Node (PDSN) 132, an IP network 134, and a Remote Authentication Dial-In User Service (RADIUS) server 136. SS7 network 140 is communicatively coupled to a network 142 (such as a Public Switched Telephone Network or PSTN), whereas IP network is communicatively coupled to a network 144 (such as the Internet).

During operation, mobile device 102 communicates with RN 128 which performs functions such as call-setup, call processing, and mobility management. RN 128 includes a plurality of base station transceiver systems that provide wireless network coverage for a particular coverage area commonly referred to as a "cell". A given base station transceiver system of RN 128, such as the one shown in FIG. 1, transmits communication signals to and receives communication signals from mobile stations within its cell. The base station transceiver system normally performs such functions as modulation and possibly encoding and/or encryption of signals to be transmitted to the mobile station in accordance with particular, usually predetermined, communication protocols and parameters, under control of its controller. The base station transceiver system similarly demodulates and possibly decodes and decrypts, if necessary, any communication signals received from mobile device 102 within its cell. Communication protocols and parameters may vary between different networks. For example, one network may employ a different modulation scheme and operate at different frequencies than other networks. The underlying services may also differ based on its particular protocol revision.

The wireless link shown in communication system 100 of FIG. 1 represents one or more different channels, typically different radio frequency (RF) channels, and associated protocols used between wireless network 104 and mobile device 102. An RF channel is a limited resource that must be conserved, typically due to limits in overall bandwidth and a limited battery power of mobile device 102. Those skilled in art will appreciate that a wireless network in actual practice may include hundreds of cells depending upon desired overall expanse of network coverage. All pertinent components may be connected by multiple switches and routers (not shown), controlled by multiple network controllers.

For all mobile devices 102 registered with a network operator, permanent data (such as mobile device 102 user's profile) as well as temporary data (such as mobile device's 102 current location) are stored in a HLR/AC 138. In case of a voice call to mobile device 102, HLR/AC 138 is queried to determine the current location of mobile device 102. A Visitor Location Register (VLR) of MSC 130 is responsible for a group of location areas and stores the data of those mobile devices that are currently in its area of responsibility. This includes parts of the permanent mobile device data that have been transmitted from HLR/AC 138 to the VLR for faster access. However, the VLR of MSC 130 may also assign and store local data, such as temporary identifications. Mobile device 102 is also authenticated on system access by HLR/AC 138. In order to provide packet data services to mobile device 102 in a CDMA2000-based network, RN 128 communicates with PDSN 132. PDSN 132 provides access to the Internet 144 (or intranets, Wireless Application Protocol (WAP) servers, etc.) through IP network 134. PDSN 132 also provides foreign agent (FA) functionality in mobile IP networks as well as packet transport for virtual private networking. PDSN 132 has a range of IP addresses and performs IP address management, session maintenance, and optional caching. RADIUS server 136 is responsible for performing functions related to authentication, authorization, and accounting (AAA) of packet data services, and may be referred to as an AAA server.

Wireless communication network 104 also includes a Push-to-talk over Cellular (PoC) server 137 which is coupled to a wide area network (WAN) such as IP network 134. PoC server 137 operates to facilitate PoC individual and group communication sessions between mobile devices within network 104. A conventional PoC communication session involves a session connection between end users of mobile devices, referred to as session "participants", who communicate one at a time in a half-duplex manner much like conventional walkie-talkies or two-way radios.

Those skilled in art will appreciate that wireless network 104 may be connected to other systems, possibly including other networks, not explicitly shown in FIG. 1. Although a CDMA network has been described as the environment, other suitable networks may be utilized, such as Global System for Mobile communications (GSM) and General Packet Radio Service (GPRS) network.

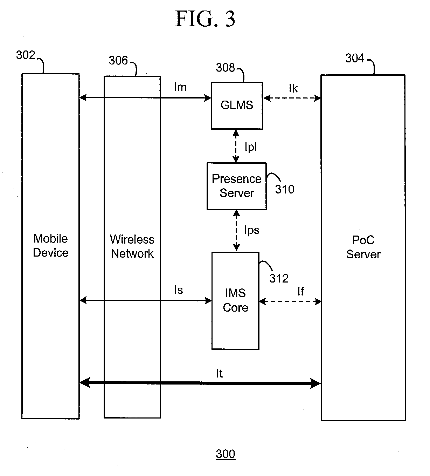

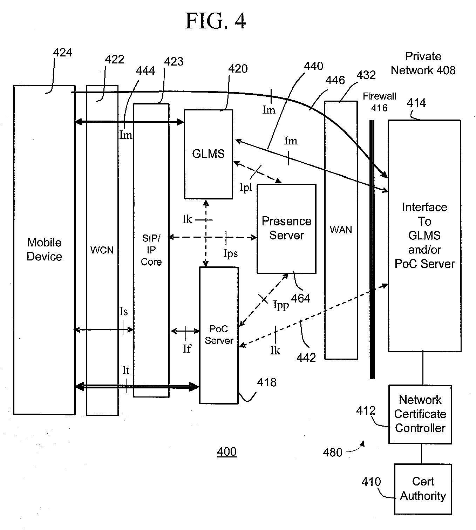

FIG. 2 is a detailed block diagram of a preferred mobile communication device for that described in relation to FIG. 1, namely a mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of base station transceiver systems 200 within its geographic coverage area. Mobile station 202 selects or helps select which one of base station transceiver systems 200 it will communicate with, as will be described in more detail later in relation to FIGs. 3 and 4.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a memory module 262, such as a Subscriber Identity Module or "SIM" card or a Removable User Identity Module (R-UIM), to be inserted in or connected to an interface 264 of mobile station 202 in order to operate in the network. Alternatively, memory module 262 may be a non-volatile memory which is programmed with configuration data by a service provider so that mobile station 202 may operate in the network. Since mobile station 202 is a mobile battery-powered device, it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown in FIG. 2) which provides power V+ to all of the circuitry.

Mobile station 202 includes a microprocessor 238 (which is one implementation of controller 106 of FIG. 1) which controls overall operation of mobile station 202. This control includes the secure PoC communication session techniques of the present application. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 256 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication. Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

To illustrate general principles of Push-to-talk over Cellular (PoC) communications, FIG. 3 is a block diagram of general system components 300 pertaining to PoC architecture. System components 300 include user equipment (UE) 302 which represents a mobile station, a Push-to-talk over Cellular (PoC) server 304, an access 306, a Group and List Management Server (GLMS) 308, an IP Multimedia Subsystem (IMS) core 312, and a presence server 310.

A PoC communication session is a session connection between end users of a UE 302, referred to as session "participants", who communicate one at a time in a half-duplex manner. PoC communication utilizes Voice over IP (VoIP) technology which involves the communication of data packets carrying voice information. UE 302 is terminal equipment (e.g. a mobile station) which includes PoC application client software, which includes functionality of the present application but otherwise utilizes conventional techniques. IMS core 312 includes a plurality of Session Initiation Protocol (SIP) proxies and SIP registrars. The first point of contact for UE 302 is one of the proxies in IMS core 312 that is configured on UE 302 as the outbound proxy. In the IMS architecture, the outbound proxy is known as the Proxy-CSCF (P-CSCF). IMS Core 312 performs the following functions: (1) routing of SIP signaling between UE 302 and PoC server 304; (2) termination of SIP compression from UE 302; (3) authentication and authorization; (4) maintenance of the registration state and the SIP session state; and (5) reporting to the charging system. UE 302 sends all its SIP messages to the IP address of the outbound proxy after resolving the SIP Uniform Resource Identifier (URI) of the outbound proxy to an IP address.

End users use GLMS 308 to manage groups, contact lists, and access lists. A contact list is a type of address book that may be used by end users to establish an instant talk session with other PoC users or PoC Groups. An end user may have one or several contact lists including identities of other PoC users or PoC groups. Contact list management includes operations to allow UE 302 to store and retrieve the contact lists located in GLMS 308. End users can define PoC groups. An end user may select one group from the list to initiate an instant group talk session or a chat group talk session, depending on the type of group. An access list is used by the end user as a means of controlling who is allowed to initiate instant talk sessions to the end user. An access list contains end user defined identities of other end users or groups. The end user may have one blocked identities list and one granted identities list.

PoC server 304 includes functionality to perform the PoC service. PoC Server 304 typically performs functions such as: (1) end-point for SIP signaling; (2) end-point for real-time transport protocol (RTP) and RTP Control Protocol (RTCP) signaling; (3) SIP session handling; (4) policy control for access to groups; (5) group session handling; (6) access control; (7) do-not-disturb functionality; (8) floor control functionality (floor control is a control mechanism that arbitrates requests, from the UEs, for the right to speak); (9) talker identification; (10) participant information; (10) quality feedback; (11) charging reports; and (12) media distribution. Presence server 310 manages presence information that is uploaded by presence user/network/external agents, and is responsible for combining the presence-related information for a certain presentity from the information it receives from multiple sources into a single presence document.

An Is interface (i.e. PoC Client to Proxies Session Signaling) supports the communication between UE 302 and IMS core 312. This communication includes SIP procedures which support the PoC features. The protocol for the Is interface is Session Initiation Protocol (SIP). Is signaling is transported on User Datagram Protocol (UDP). The protocols over an If interface (i.e. Proxy to PoC Server Session Signaling) support the communication between IMS core 312 and PoC server 304 for session control. The protocols over an It interface (i.e. Floor Control and media) support the transport of talk bursts, floor control, and link quality messages between UE 302 and PoC Server 304. The protocols over an Im interface (i.e. Group Mgmt to PoC Client) support the communication between UE 302 and GLMS 308 for the purpose of managing the groups, contact lists and access lists and Do-not-Disturb indication. HTTP/XML protocols are utilized for these purposes. The protocols over an Ik interface (i.e. Group Mgmt to PoC Server) support the communication between PoC Server 304 and GLMS 308, enabling PoC server 304 to retrieve the groups and access lists from GLMS 308. The protocols over an Ips interface enable the uploading of the registration status from IMS core 312 to presence server 310 and the dissemination of the presence information between presence server 310 and UE 302. The protocol over an Ipl interface enables the uploading of Do-not-Disturb status and granted/blocked access lists from GLMS 308 to presence server 310. The group identity used on the Is interface between the UE and IMS core for group talk is generated by GLMS 308.

Each entity in the PoC system is assigned one or more IP addresses belonging to public or private IP realms. On the other hand, an end user may address another user by a phone number. UE 302 sends a phone number to IMS core 312 in a TEL Uniform Resource Locator (URL). The phone number may use the international E.164 format (prefixed with a '+' sign) or a local format using a local dialing plan and prefix. IMS core 312 interprets the phone number with a leading '+' to be an E.164 number. Addressing by TEL URL for a PoC session requires that PoC Server 304 can resolve the TEL URL to a SIP URI, for instance by using DNS/ENUM or other local data base. A phone number in a local format is converted to the E.164 format before DNS/ENUM is used.

End users may initiate PoC talk sessions. An INVITE request on the Is interface contains an "Accept-Contact" header with a media feature tag indicating the PoC service. IMS core 312 is able to identify the request as a PoC communication by inspecting the Accept-Contact header. A Request-URI of the INVITE contains either the preconfigured ad-hoc identity (for instant personal talk and ad-hoc instant group) or a group identity (for instant group talk or chat group talk). Early session establishment is used for having a session available for quick connection establishment using "REFER". The early session establishment's INVITE does not have any referred party field and can be differentiated from this against other INVITEs. A transient group identity is generated by PoC server 304 and distributed to UE 302 in the "Contact" header. From an initiating UE 302, the public user identity of the inviting user is included in the "From" header. On the signaling towards the invited user, the "From" header includes either the public user identity (instant personal talk, ad-hoc instant group) or the group identity (instant group talk or being added to a chat group).

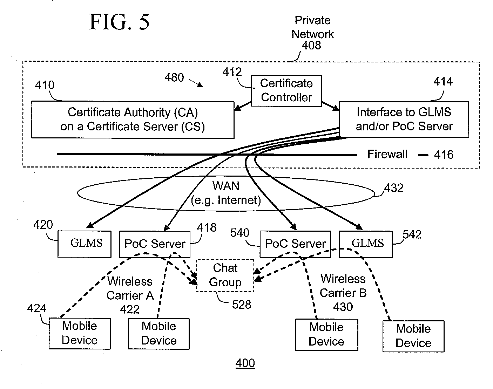

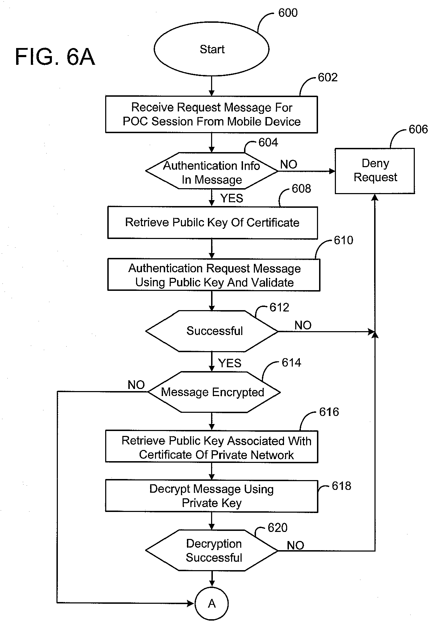

FIGs. 4 and 5 are illustrative depictions of architecture and components of a communication system 400 of the present application which provide for secure PoC communication sessions for mobile communication devices. The architecture and components of FIGs. 4 and 5 build upon standard architecture and components (e.g. see description in relation to FIG. 3). For example, components of FIGs. 4 and 5 including a wireless communication network 422, a SIP/IP core 421, a mobile communication device 424, a GLMS server 420, a PoC server 418, and a presence server 464, build upon the standard components of FIG. 3 which include wireless communication network 306, IMS core 312, mobile communication device 302, GLMS server 308, PoC server 304, and presence server 310 as previously described. Other than the inventive techniques described herein (described below and in relation to FIGs. 6A-6B), the PoC architecture and signaling may be the same as or similar to current standards (i.e. the application techniques are built upon standard architecture and protocols), as described in current standard specifications such as Push-to-talk over Cellular (PoC), Architecture, PoC Release 1.0 - Architecture V1.1.0 (2003-08) Technical Specification; and Push-to-talk over Cellular (PoC), Signaling Flows, PoC Release 1.0 - Signaling Flows V1.1.3 (2003-08) Technical Specification, for example. Further, although the PoC architecture and signaling has been provided as the exemplary environment for the techniques of the present application, any suitable network for voice communication sessions may be utilized. That is, general voice calls or chats (e.g. point-to-point voice calls) may also be facilitated based on the techniques of the present application. Note that "PoC server" may be referred to herein more generally as a voice session server and "GLMS server" may be referred to herein more generally as a group list server.

Communication system 400 of FIGs. 4 and 5 further includes a private communication network 408 (e.g. of a private or public enterprise) which governs or controls use of mobile device 424 as well as many other mobile communication devices (e.g. see FIG. 5). For example, private network 408 may be that of a company or corporation. Private network 408 has a need for secure PoC communication sessions for its mobile devices. To help provide secure PoC sessions, private network 408 includes a private network certificate control mechanism 480. In this embodiment, certificate control mechanism 480 includes a certificate controller 412, a certificate authority (CA) 410 which resides on a certificate server (CS), and an interface 414. Certificate controller 412 may be any computer platform in private network 408, even a Personal Computer (PC), and be part of an IT department of the company. In general, certificate controller 412 is adapted to connect and communicate with CA 410 so as to produce and store a plurality of digital certificates for the mobile communication devices. CA 410 may be provided as part of or within private network 408 or, alternatively, be outside of private network 408 and provided by a different entity. The digital certificates may be stored in a database accessible by the CS, the certificate controller 412, or both. Certificate controller 412 may maintain its own group and chats lists in a database, and therefore may be or include a "corporate" or "private" GLMS where the lists are associated with digital certificates.

Certificate controller 412 is also adapted to connect and communicate with interface 414 so that it may communicate, through a firewall 416, with components connected in a wide area network (WAN) 432 (e.g. the Internet). In particular, certificate controller 412 may be adapted to communicate with GLMS server 420, PoC server 418, mobile device 424, or any combination thereof, via the WAN 432 through interface 414. Certificate controller 412 is adapted to communicate with these components in order to provide the digital certificates for facilitating secure PoC sessions for chat groups which include the mobile devices. Mobile device 424 (i.e. any PoC client) and PoC server 418 have authentication functionality components which provide for secure and/or authenticated PoC sessions for chat groups.

As revealed in FIG. 4, traffic between GLMS server 420 and interface 414 use interface Im 444 (i.e. Group Mgmt to PoC Client). Interfaces Im 444 and 446 are defined in 3GPP PoC specifications as an XML formatted packet over an HTTP interface, which is the same interface defined and in use by mobile device 424 and GLMS server 420. Thus, interface 414 of private network 408 may operate as a PoC client for inserting "corporate-approved" group and chat lists into GLMS server 420. Another interface Im 446 connects the mobile device to interface 414, for providing access to certificates, group names and chat lists. An optional interface Ik 442 (i.e. Group Mgmt to PoC Server) may connect interface 414 to PoC server 418. Given that PoC server 418 normally interacts with GLMS server 420, however, this interface Ik 442 may not be necessary.

Note that FIG. 5 particularly reveals that communications may be made between certificate controller 412 and GLMS/PoC servers of different wireless communication networks 422 and 430. In FIG. 5, GLMS server 420 and PoC server 418 are associated with wireless network 422 whereas a GLMS server 540 and PoC server 542 are associated with wireless network 430. Such a configuration may be utilized so that secure PoC sessions (a chat group session 428) may be established amongst mobile devices operating in such different wireless networks 422 and 430.

Authenticated and/or secure PoC sessions may be established with use of digital certificates that are uniquely associated with the mobile devices or end users thereof, and issued by the "company" or private network serving the CA role. Additionally or alternatively, each digital certificate which is produced and stored may be uniquely associated with a chat group. A group digital certificate is company or corporate-approved, and allows all members of the group to verify with a central authority that the chat group is valid and all members of the chat group are approved for belonging to the chat group. This may be confirmed as the CA 410 signs the certificate and PoC server 418 or other component or member being able to verify that the signature as originating from the CS within the company.

Digital certificates for mobile devices are first produced and stored by private network 408 (e.g. by certificate controller 412). Certificate controller 412 may then itself register authorized group, group lists, and chat lists with digital certificates in GLMS server 420 through interface 414. As described above, certificate controller 412 may maintain its own group and chats lists in a database, and therefore may be or include a "corporate" or "private" GLMS where the lists are associated with digital certificates. Additionally or alternatively, mobile device 424 may retrieve the authorized group, group lists, and chat lists with the digital certificates through interface 414 and subsequently register them in GLMS server 420. Once this is complete, mobile device 424 acts as any other PoC client in invoking group and chat lists as needed via PoC server 418. Thus, the stored digital certificates may be retrieved and/or exchanged when needed throughout system 300. When the digital certificates are stored in databases accessible by GLMS server 420 and/or PoC server 418, these may be accessed when needed through stored associations (e.g. data or database tables) between the digital certificates and mobile device identifiers such as e-mail addresses, telephone numbers, IP addresses, SIP Universal Resource Identifiers (URI), etc.

Authenticated and/or secure PoC communication sessions the for the mobile devices are made possible with use of these digital certificates. In general, a digital certificate is an attachment to an electronic message used for security. The most common use of a digital certificate is to verify that a user sending a message is who he/she claims to be and to provide the receiver with the means to encode a reply. The digital certificate is based on a cryptographic system that uses two keys, a public key which is publicly available and a private (or secret) key known only to the holder of the digital certificate. When user A wants to send a secure message to user B, user A uses user B's public key to encrypt the message. User B then uses the private key of user B to decrypt the message. The public and private keys are related in such a way that only the public key can be used to encrypt messages and only the corresponding private key can be used to decrypt them; it is virtually impossible to deduce the private key if one knows only the public key.

A digital certificate includes a collection of data used to verify the identity of the holder of the certificate. A digital certificate may contain information (e.g. a X.509 based certificate) which includes identifiers or indicators of a version, a serial number, a certificate issuer, a certificate holder, a validity period (the certificate is not valid before or after this period), attributes (known as certificate extensions, that contain additional information such as allowable uses for this certificate), a digital signature from a certification authority (CA) (to ensure that the certificate has not been altered and to indicate the identity of the issuer), a public key of the owner of the certificate, and a message digest algorithm used to create the signature. The digital signature identifies or indicates the digital certificate of the signer, and the digital certificate contains a digital signature which further identifies or indicates another digital certificate. In general, each digital certificate is verified through the use of another digital certificate, creating a chain of digital certificates that ends with the root digital certificate. The owner of the root certificate is the root certification authority.

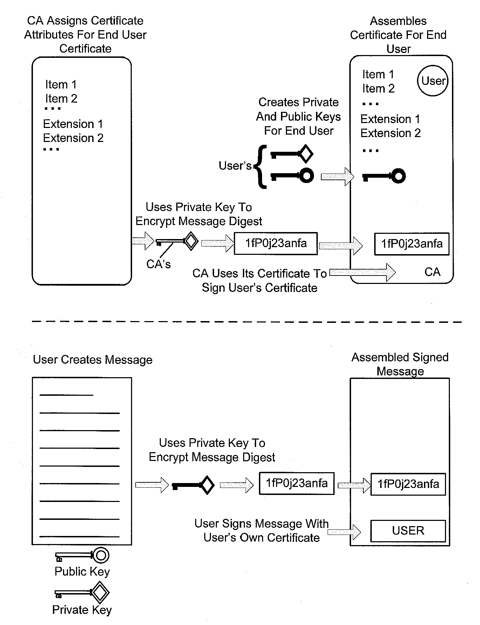

Referring ahead with general reference to FIG. 7, the mobile device of the present application that sends a message is adapted to sign or provide a signature in the message. The signature identifies or indicates a digital certificate associated with the mobile device (labeled "User" in FIG. 7). The message's creator signs the message with use of a private key associated with the digital certificate. The digital certificate contains the corresponding public key which is used to decrypt the message digest to verify the signature. The digital certificate, together with the private and public keys, was originally provided by the CA. So that the validity of the user's certificate may be verified, the digital certificate is also signed based on another digital certificate associated with the Certificate Authority (CA). In fact, the signature of every digital certificate the CA issues refers to its own signing certificate. When the CA creates a digital certificate, it uses its private key to encrypt the certificate's message digest. The digital certificate of the CA includes the public key needed to verify the digital certificate of the CA and to decrypt the message digest of the user's digital certificate. Continuing through the certificate chain, the digital certificate of the CA is signed using the certificate of the authority who issued that certificate. The chain can go on through any number of intermediate certificates, but the original issuer of the CA's certificate is the "root" certification authority. Note that the certificate of the root CA, unlike the others, is "self signed." That is, it does not refer to a further certification authority but is signed using the root CA's own private key; the chain stops here. The certificate of the root CA can be verified by creating a digest and comparing it with one widely available. Typically, the root certificate and root CA's public key are stored in the application or the device that needs to verify the signature.

Preferably, the digital certificates utilized in the present application are based on a Secure Multi-Purpose Internet Mail Extensions (S/MIME) standard. S/MIME has been traditionally used as a secure method of sending e-mail based on the Rivest-Shamir-Adleman (RSA) encryption techniques. An alternative to S/MIME is Pretty Good Privacy (PGP)/MIME, which has also been proposed as a standard. MIME itself, described in the Internet Engineering Task Force (IETF) standard under Request for Comments (RFC) 1521, defines how such electronic messages may be organized. S/MIME describes how encryption information and a digital certificate may be included as part of the message body. S/MIME follows the syntax provided in the Public-Key Cryptography Standard format #7.

Referring back to FIG. 3, example commands are now provided to illustrate further detailed communication. An unmodified HTTP command across a standard Im interface may be presented as follows:

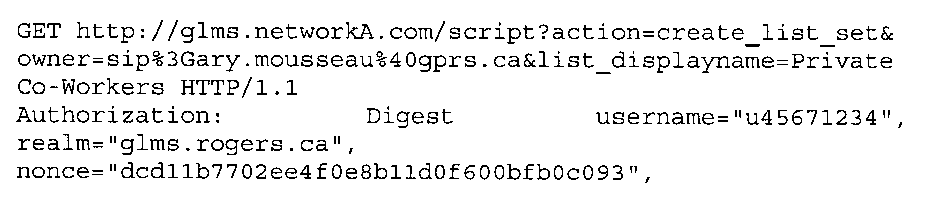

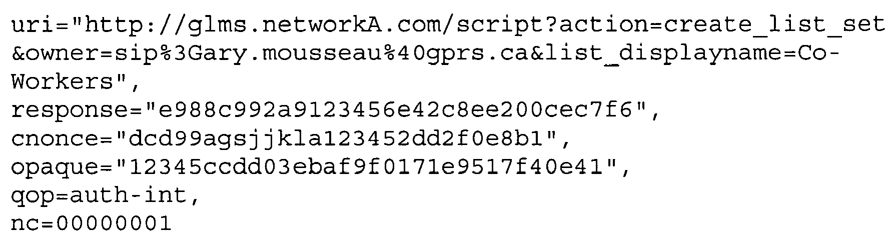

When sent directly to interface 414, however, the HTTP command may be modified as follows:

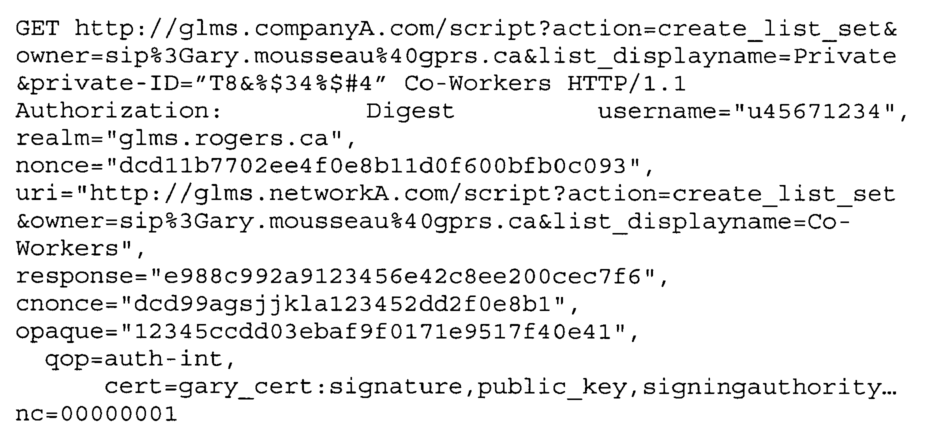

The addition of a new domain name (e.g. 'glms.companyA.com') allows the HTTP request to be routed directly to interface 414 through a public Internet access point offered by most wireless carriers today. In this modified example, the response back from interface 414 may contain a digital certificate for the person or group being exchanged.

Another modification may be extended addressing made to SIP requests that get passed along to PoC server 418. For example, within the SIP and Ik interface the following would be information that is normally exchanged:

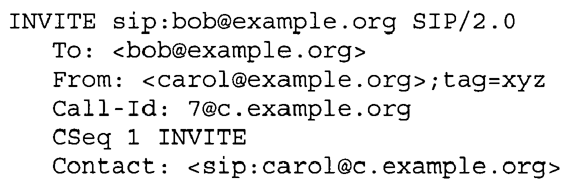

From a mobile device modified to operate with interface 414, the SIP invitation may be altered as follows:

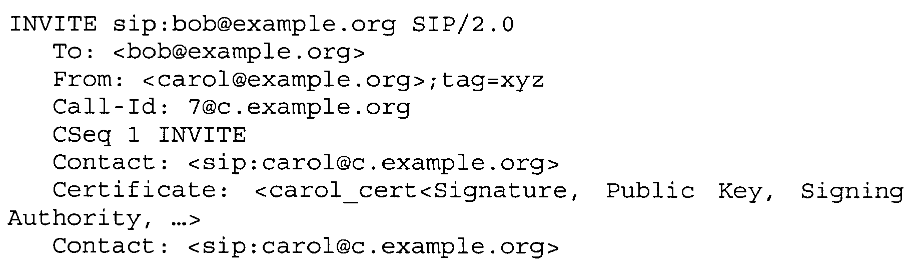

The presence of an extended 'Certificate' field allows the initiator to send their digital certificate along with the request. The Accept may also have an extended field that carries the digital certificate. Additionally or alternatively, the SIP Request authorization header is used to carry the credentials of the user. In this case, the header may be used to carry the certificate information and would accompany the invitation and acceptance SIP messages.

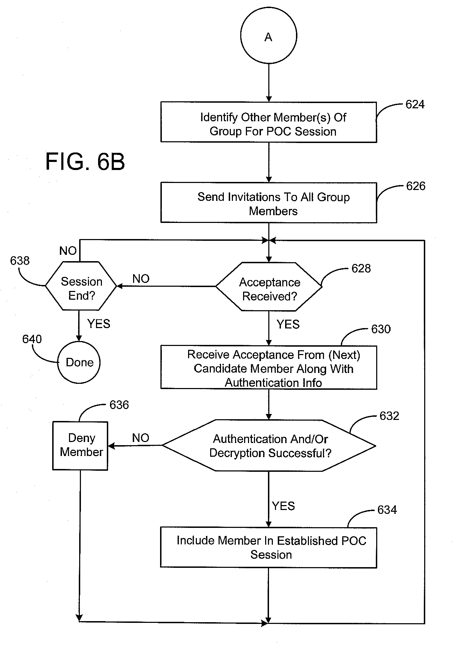

FIGs. 6A and 6B form a flowchart for describing a method for use in increasing security and control of voice communication sessions (e.g. PoC communication sessions) using digital certificates. The method described in relation to the flowchart may include other details already described above with respect to secure and/or authentication sessions, even though it may not explicitly detail this information below. The techniques may be performed by one or more controllers or processors of the PoC server. Although the description of FIGs. 6A and 6B recites the "PoC server" as performing all of the steps of the method, the PoC server may delegate responsibilities to other internal or external components. For example, the PoC server may delegate the authentication and verification steps to an authentication component which may or may not reside outside of the PoC server equipment. Similarly, techniques at the mobile device end may be performed by one or more controllers or processors of the mobile device. A computer program product of the present application may include a computer readable medium (e.g. memory or computer disk) and computer instructions stored in the computer readable medium which are executable by the controllers or processors for performing the method.

Beginning at a start block 600 of FIG. 6A, the PoC server receives a request message for establishing and participating in a PoC communication session which is sent from a mobile communication device through a wireless communication network (step 602 of FIG. 6A). The mobile communication device may be associated or affiliated with a private communication network of a private or public enterprise (e.g. see FIGs. 4 and 5). The PoC server identifies whether authentication information (e.g. a signature or encrypted message portion) is provided in the request message (step 604 of FIG. 6A). If authentication information is not sent along with the request message at step 604, then the request for the PoC communication session is denied (step 606 of FIG. 6A). Any denial of a request by the PoC server may include the sending of a denial notification (e.g. "unauthorized access" indication) to the mobile device and/or the network control of the private communication network.

If authentication information (e.g. a signature or encrypted message portion) is sent along with the request message at step 604, then processing for the PoC communication session continues at step 608 of FIG. 6A. The request message is "signed" by the mobile communication device with use of a private key associated with a digital certificate. The digital certificate may be uniquely associated with and established for the mobile communication device, an end user of the mobile communication device, or a chat group which includes the mobile communication device. Thus, the PoC server will attempt to authenticate the request message based on the digital certificate. Specifically, the PoC server retrieves a public key associated with the digital certificate (step 608 of FIG. 6A) and attempts to decrypt the signature with use of the public key (step 610 of FIG. 6A). If authentication is unsuccessful (e.g. the signature is not successfully decrypted) (step 612 of FIG. 6A), then the request for the PoC communication session is denied (step 606 of FIG. 6A). Again, any denial of a request by the PoC server may include the sending of a denial notification to the mobile device and/or the network control of the private communication network. If the authentication is successful at step 612 (e.g. the signature is successfully decrypted), then processing for the PoC communication session continues at step 614 of FIG. 6A.

In addition or as an alternative to steps 608-612, at least a portion of the request message sent by the mobile communication device may also be encrypted with use of a public key associated with a different digital certificate. This other digital certificate may be uniquely associated with and established for the PoC server or the private communication network associated with the mobile communication device. If the request message is not encrypted (step 614 of FIG. 6A), then the PoC server proceeds to a connector A to FIG. 6B for further processing for the PoC communication session and verification. If the request message is encrypted at step 614, then the PoC server proceeds to retrieve a private key associated with the digital certificate (step 616 of FIG. 6A). The PoC server then attempts to decrypt the request message with use of the private key (step 618 of FIG. 6A). If the decryption is unsuccessful (step 620 of FIG. 6A), then the request is denied (step 606 of FIG. 6A). If the decryption is successful (step 620), then processing for the PoC communication session is continued through the connector A to FIG. 6B.

In FIG. 6B, the PoC server identifies other members of the chat group for the PoC communication session (step 624 of FIG. 6B). This may be done simply by identifying a list of identifiers corresponding to the members of the chat group within the request message. The identifiers may be, for example, telephone numbers associated with the devices, IP addresses associated with the devices, public keys associated with the devices, etc. Alternatively, the request message may contain the digital certificates of all of the members of the chat group to identify the members. On the other hand, if a valid digital certificate in step 604 uniquely corresponds to a chat group, the members of the group may be implied in the digital certificate where the PoC server reads a data table which associates the group digital certificate with a prestored list of identifiers corresponding to the members of the chat group.

Next, the PoC server causes invitation messages for participating in the PoC communication session to be sent to all other members of the chat group corresponding to the list of identifiers (step 626 of FIG. 6B). If and when an acceptance message from a candidate member is sent (step 628 of FIG. 6B), the PoC server receives the acceptance message (step 630 of FIG. 6B). The acceptance message from the candidate member may include a signature as did the request message from the originating device in steps 602 and 604. Again, a digital certificate may be uniquely associated with and established in advance for the candidate member (mobile communication device), an end user of the mobile communication device, or a chat group which includes the mobile communication device. Thus, authentication and/or decryption may be performed for the acceptance message from the member (step 632 of FIG. 6B) in the same or similar manner as described above in relation to steps 604-620 (not repeated here for sake of brevity). If the authentication and/or decryption is unsuccessful (step 632 of FIG. 6B), then the member is denied from participation in the PoC communication session. Any denial of a request by the PoC server may include the sending of a denial notification (e.g. "unauthorized access" indication) to the mobile device and/or the network control of the private communication network. If the authorization and/or decryption is successful at step 632, then the member is included within the established PoC communication session.

Processing continues where the PoC server monitors for any new acceptances from candidate members at step 628 of FIG. 6B after steps 634 and 636. Operation in steps 623-634 may continue for each and every member of the chat group. When the session is ended (step 638 of FIG. 6B), the flowchart ends at a done block 640 but the method may continue for each and every PoC communication session.

Additional or alternative verifications may be performed by each member when invitation messages are sent from the PoC server to the other chat group members in step 626. In one example, the invitation message is sent along with a signature of the PoC server or the private network with use of a private key of a digital certificate associated with the PoC server or the private network. In this case, the mobile device of the candidate member will attempt to decrypt the invitation message with use of a public key associated with the digital certificate of the PoC server or the private communication network. Additionally or alternatively, at least a portion of the invitation message is encrypted with use of a public key of the digital certificate associated with the mobile device, the end user of the mobile device, or the chat group. In this case, the mobile device of the candidate member will attempt to decrypt the signed digital certificate with use of a private key associated with the digital certificate.

Note that if an attempt to participate in a PoC communication session is made by a fraudulent or eavesdropping mobile device, the request or acceptance message may fail to contain a (valid) digital certificate, a properly signed digital certificate, or a properly encrypted message. Thus, attempts by such devices will fail. Advantageously, security is provided with use of the present system and methods.

The discussion will now focus on the use of more specific digital certificates ("delegation certificates") which may be utilized in a further embodiment. In this further embodiment, delegation certificates are preferably utilized by private network 408 to provide for secure PoC sessions. A delegation certificate is a signed message with which an entity grants access rights to another entity. The delegation certificate is signed with use of public key cryptography and the entities granting and receiving access rights are cryptographic keys. An example delegation certificate includes the following: Subjects = K2; Authorization = R1; Validity = T1-T2; and Issuer = K1. Using Simple Public Key Infrastructure (SPKI) terminology, the key that signed the certificate, K1, is the issuer and the key to whom the rights are given, K2, is the subjects of the certificate, and the rights given by the certificate, R1, are the authorization. All delegation certificates have a validity period specified in the above example as T1-T2. By signing the above delegation certificate, the issuer shares authority in the right with the subject for the duration validity period. Note that the information above may be explicit or implied (e.g. no need to state subject rights or validity period).

One property of the delegation certificate is that the subject automatically gains the right to sign their own delegation certificates for the rights which they have gained. This forms delegation certificate chains which may be managed using a technique known in the art as certificate reduction, which verifies the certificate chains by intersecting the sets of rights and validity periods. Another property of the delegation certificate is that they are key-oriented versus identity-oriented; identity-oriented certificates rely on CAs whereas key-oriented certificates do not need to involve CAs. Thus, authority for a group of participants ay flow from a "grand master" delegation certificate, signed by the PoC server, listing the keys of the "master" company or entity of the private network, and limiting their rights. If all members have obtained their rights from delegation certificates signed by a "grand master" key (e.g. PoC server or private network), this technique may result in one delegation certificate being created for each key listing all rights which that key has as issued by the "grand master" key of the PoC server. Appropriate checks for authorization, time validity, delegation rights for others to join the call, may be made at the PoC server.

Final Comments. Methods and apparatus for increasing security and control of voice communication sessions, such as Push-To-Talk (PTT) over Cellular (PoC) sessions, using digital certificates are described herein. A certificate control mechanism of a private communication network (e.g. a corporate enterprise) is used to help facilitate secure PoC communication sessions for mobile communication devices associated with the private network. The certificate control mechanism of the private network includes a certificate controller which is adapted to communicate with a Certificate Authority (CA) component so as to produce and store a plurality of digital certificates for the mobile communication devices. The certificate controller is further adapted to communicate with one of a PoC server and a PoC group list server through a public communication network (e.g. the Internet) so as to provide the digital certificates for use in facilitating secure PoC communication sessions for chat groups which include the mobile communication devices.

In one illustrative technique, a request message for participation in a PoC communication session is received by an authentication component of a PoC server from a mobile communication device. The request message is signed with use of a private key of a digital certificate which may be associated with the mobile communication device, an end user of the mobile communication device, or a chat group which includes the mobile communication device. An authentication procedure is performed on the request message by the authentication component. The authentication procedure includes retrieving a public key associated with the digital certificate and attempting to validate the signature with use of the public key. Processing for the PoC communication session is permitted for the mobile communication device if the authentication is successful, and otherwise denied. Additionally or alternatively, at least a portion of the request message may be encrypted by the mobile communication device with a public key of another digital certificate which may be associated with the authentication component or a private network of the mobile communication device. In this case, the portion of the request message is decrypted by the authentication component using a private key of the digital certificate. Several other techniques and variations are described herein.

An authentication component of a voice session server for establishing a voice communication session for a plurality of mobile communication devices is adapted to receive, from a mobile communication device, a request message for the voice communication session which is signed using a private key associated with a digital certificate; cause an authentication to be performed on the request message which includes retrieving a public key associated with the signed digital certificate and attempting to verify the signature in the request message with use of the public key; and permit processing for the voice communication session for the mobile communication device if the authentication is successful. A computer program product of the present application may include a computer readable medium (e.g. memory or computer disk) and computer instructions stored in the computer readable medium which are executable by the controllers or processors for performing the technique.

Another method of the present application for use by a mobile communication device in establishing a voice communication session with one or more other mobile communication devices may include the acts of signing a request message for the voice communication session with a private key associated with a digital certificate; causing the request message for the voice communication session to be sent through a wireless communication network for authentication within the communication system; and engaging in the voice communication session with the one or more mobile communication devices based on the authentication. A related mobile communication device of the present application may include a wireless transceiver and one or more processors coupled to the wireless transceiver which are adapted to sign a request message for the voice communication session with a private key associated with a digital certificate; cause the request message for the voice communication session to be sent, via the wireless transceiver, for authentication within the communication system; and engage in the voice communication session with the one or more mobile communication devices based on the authentication.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A private network certificate control mechanism for use in facilitating secure Push-To-Talk (PTT) over Cellular (PoC) communications for mobile communication devices associated with a private communication network, the interface having:
a certificate controller;
the certificate controller being adapted to communicate with a Certificate Authority (CA) component so as to produce and store a plurality of digital certificates for a plurality of mobile communication devices associated with a private communication network; and
the certificate controller being further adapted to communicate with one of a PoC server and a PoC group list server over a public communication network so as to provide the plurality of digital certificates for secure PoC communication sessions for chat groups which include the plurality of mobile communication devices.

2. The certificate control mechanism of claim 1, further comprising:
an interface which is adapted to communicate with the certificate controller and with the one of the PoC server and the PoC group list server.

3. The certificate control mechanism of claim 1, wherein the certificate controller is further adapted to, for each one of a plurality of mobile communication devices:
request and receive, from the CA, a digital certificate for the mobile communication device; and
provide the digital certificate to the one of the PoC server and the PoC group list server so that the PoC server is able to authenticate request messages for participating in PoC communication sessions from the mobile communication device.

4. The certificate control mechanism of claim 1, wherein the certificate controller is further adapted to:
request and receive, from the CA, a digital certificate for a chat group of mobile communication devices; and
provide the digital certificate to the one of the PoC server and the PoC group list server so that the PoC server is able to authenticate request messages for participation in PoC communication sessions from the mobile communication devices of the chat group.

5. The certificate control mechanism of claim 1, wherein the one of the PoC server and the PoC group list server are part of a first wireless communication network and the certificate controller is further adapted to communicate with another one of a PoC server and a PoC group list server of a second wireless communication network.

6. The certificate control mechanism of claim 1, wherein the public communication network comprises the Internet and the private communication network includes a firewall between the private communication network and the Internet.

7. A method for use by an authentication component of a voice session server for establishing a voice communication session for a plurality of mobile communication devices, the method comprising the acts of:
receiving, from a mobile communication device, a request message for the voice communication session which is signed with a private key associated with a digital certificate;
causing an authentication to be performed on the request message, which includes:
retrieving a public key associated with the digital certificate;
attempting to verify the signature in the request message using the public key; and
permitting processing for the voice communication session for the mobile communication device if the authentication is successful.

8. The method of claim 7, wherein the voice communication session comprises a Push-To-Talk (PTT) over Cellular (PoC) communication session and the voice session server comprises a PoC server.

9. The method of claim 7, wherein the digital certificate is associated with one of the mobile communication device, an end user of the mobile communication device, and a chat group which includes the mobile communication device

10. The method of claim 7, wherein the digital certificate comprises a first digital certificate, the private key comprises a first private key, and the public key comprises a first public key, and wherein at least a portion of the request message is encrypted with a second public key of a second digital certificate associated with one of the authentication component of the voice session server and a private network of the mobile communication device, the method further comprising the act of:
decrypting the at least portion of the request message with a second private key of the second digital certificate.

11. The method of claim 7, wherein the digital certificate comprises a first digital certificate, the private key comprises a first private key, and the public key comprises a first public key, the method further comprising:
causing an invitation message for the voice communication session to be sent to at least one other mobile communication device which is signed with a second private key of a second digital certificate associated with one of the authentication component of the voice session server and a private network associated with the at least one other mobile communication device.

12. The method of claim 7, wherein the digital certificate comprises a first digital certificate, the private key comprises a first private key, and the public key comprises a first public key, the method further comprising:
causing an invitation message for the voice communication session to be sent to at least one other mobile communication device which is encrypted using a second public key of a second digital certificate associated with one of the at least one other mobile communication device and a chat group associated with the at least one other mobile communication device.

13. The method of claim 7, wherein the digital certificate comprises a first digital certificate, the private key comprises a first private key, and the public key comprises a first public key, the method further comprising:
causing an invitation message for the voice communication session to be sent to at least one other mobile communication device; and
receiving, from the at least one mobile communication device, an acceptance message for the voice communication session which is signed with a second private key associated with a second digital certificate;
causing an authentication to be performed on the acceptance message, which includes:
retrieving a second public key associated with the second digital certificate;
attempting to verify the signature of the acceptance message with use of the second public key; and
permitting processing for the voice communication session for the at least one other mobile communication device if the authentication is successful.

14. The method of claim 7, which is embodied as a computer program product comprising a computer readable medium and computer instructions stored in the computer readable medium which are executable by one or more processors for performing the method.

15. An authentication component of a voice session server for establishing a voice communication session for a plurality of mobile communication devices, the authentication component being adapted to receive, from a mobile communication device, a request message for the voice communication session which is signed using a private key associated with a digital certificate; cause an authentication to be performed on the request message which includes retrieving a public key associated with the signed digital certificate and attempting to verify the signature in the request message with use of the public key; and permit processing for the voice communication session for the mobile communication device if the authentication is successful.

16. The authentication component of claim 15, wherein the voice communication session comprises a Push-To-Talk (PTT) over Cellular (PoC) communication session and the voice session server comprises a PoC server.

17. The authentication component of claim 15, wherein the digital certificate comprises a first digital certificate, the private key comprises a first private key, and the public key comprises a first public key, and the at least a portion of the request message is encrypted with a second public key of a second digital certificate associated with one of the authentication component of the voice session server and a private network of the mobile communication device, and the authentication component is further adapted to decrypt the at least portion of the request message with a second private key associated with the second digital certificate.

18. The authentication component of claim 15, wherein the digital certificate comprises a first digital certificate, and the authentication component is further adapted to cause an invitation message for the voice communication session to be sent to at least one other mobile communication device with a second digital certificate associated with one of the authentication component of the voice session server and a private network associated with the at least one other mobile communication device.

19. The authentication component of claim 15, wherein the digital certificate comprises a first digital certificate, and the authentication component is further adapted to cause an invitation message for the voice communication session to be sent to at least one other mobile communication device which is encrypted using a public key of a second digital certificate.

20. The authentication component of claim 15, wherein the digital certificate comprises a first digital certificate, the private key comprises a first private key, and the public key comprises a first public key, and the authentication component is further adapted to cause an invitation message for the voice communication session to be sent to at least one other mobile communication device; receive, from the at least one mobile communication device, an acceptance message for the voice communication session which is signed using a second private key of a second digital certificate; cause an authentication to be performed on the acceptance message which includes retrieving a second public key associated with the second digital certificate and attempting to verify the signature with use of the second public key; and permit processing for the voice communication session for the at least one other mobile communication device if the authentication is successful.

21. A method for use by a mobile communication device in establishing a voice communication session with one or more other mobile communication devices in a communication system, the method comprising the acts of:
signing a request message for the voice communication session with a private key associated with a digital certificate;
causing the request message for the voice communication session to be sent through a wireless communication network for authentication within the communication system; and
engaging in the voice communication session with the one or more mobile communication devices based on the authentication.

22. The method of claim 21, wherein the digital certificate comprises a first digital certificate, the private key comprises a first private key, and the public key comprises a first public key, the method further comprising:
encrypting at least a portion of the request message with a second public key of a second digital certificate associated with a voice session server in the communication system which is adapted to facilitate the voice communication session.

23. The method of claim 21, wherein the digital certificate comprises a first digital certificate, the private key comprises a first private key, and the public key comprises a first public key and the method further comprises:
encrypting at least a portion of the request message with a second public key of a second digital certificate associated with a private network associated with the mobile communication device.

24. The method of claim 21, wherein the request message further comprises one or more identifiers of the one or more mobile communication devices associated with a chat group for the voice communication session.

25. The method of claim 21, wherein the request message further comprises a chat group identifier associated with a chat group for the voice communication session.

26. The method of claim 21, wherein the voice communication session comprises a Push-To-Talk (PTT) over Cellular (PoC) communication session.

27. A mobile communication device, comprising:
a wireless transceiver;
one or more processors coupled to the wireless transceiver;
the one or more processors being adapted to:
sign a request message for the voice communication session with a private key associated with a digital certificate;
cause the request message for the voice communication session to be sent, via the wireless transceiver, for authentication within the communication system; and
engage in the voice communication session with the one or more mobile communication devices based on the authentication.

28. The mobile communication device of claim 27, wherein the digital certificate comprises a first digital certificate, the private key comprises a first private key, and the public key comprises a first public key, and the one or more processors are further adapted to encrypt at least a portion of the request message with a second public key of a second digital certificate associated with a voice session server in the communication system which is adapted to facilitate the voice communication session.

29. The mobile communication device of claim 27, wherein the digital certificate comprises a first digital certificate, the private key comprises a first private key, and the public key comprises a first public key, and the one or more processors are further adapted to encrypt at least a portion of the request message with a second public key of a second digital certificate associated with a private network associated with the mobile communication device.

30. The mobile communication device of claim 27, wherein the request message further comprises one or more identifiers associated with the one or more mobile communication devices.

31. The mobile communication device of claim 27, wherein the request message further comprises a chat group identifier associated with a chat group for the voice communication session.
